# EUROPEAN PATENT APPLICATION

(11) **EP 2 690 034 A1**
(43) Date of publication of application: **29.01.2014**
(21) Application number: 13005095.8
(22) Date of filing: 15.09.2011
(51) Int. Cl.: B65D 85/804, B65D 81/20

(54) **Instant beverage cartridge**

(30) Priority: 16.09.2010 US 383564 P; 14.09.2011 US 201113232749
(62) Divisional of application: 11760952.9
(71) Applicant: Starbucks Corporation D/b/a Starbucks Coffee Company, Seattle, WA 98134-1435 (US)
(72) Inventor: Camera, Paul, Sammamish, WA 98074 (US); Jones, Thomas M., Danville, CA 94506 (US); Wagner, Mary, Potomac, MD 20854 (US)
(74) Representative: Grünecker, Kinkeldey, Stockmair & Schwanhäusser

(57) **Abstract**

Present embodiments generally relate to a single-serve beverage cartridge (1000) for use with a single-serve coffee brewer. The cartridge (1000) includes a cup (1005), a lid (1010), and a single serving (1028) of instant coffee. The cartridge is configured to be pierced by one or more piercing members, which can provide an opening for liquid to flow into and out of the cartridge (1000). The instant beverage component (1028) is compressed. The cartridge does not include a filter or a barrier configured to retain non-liquid matter within the cartridge.

## Description

### RELATED APPLICATIONS

This application claims the benefit under 35 U.S.C. § 119(e) of U.S. Provisional Application No. 61/383,564, filed September 16, 2010, titled "BEVERAGE CARTRIDGE FOR INSTANT COFFEE," the entirety of which is incorporated herein by reference.

### FIELD

The present disclosure relates to a sealed cartridge containing a single serving of an instant beverage component for producing a beverage when fluid is introduced into the cartridge. The cartridge can be configured for use with single-serve beverage machines.

### DESCRIPTION OF CERTAIN RELATED ART

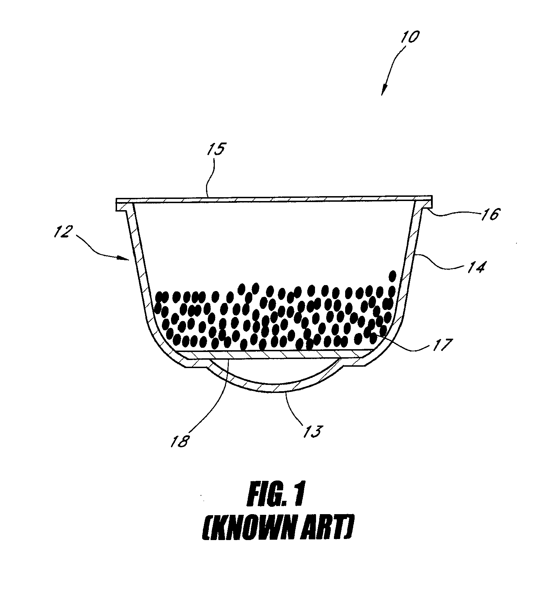

FIG. 1 illustrates beverage capsule 10 known in the art. The capsule 10 includes a container 12 with a bottom wall 13, a side wall 14, and a cover 15. The cover 15 is welded to a shoulder 16 of the capsule 10. The capsule 10 contains substantially non-soluble coffee grounds 17 for producing a brewed espresso beverage when water is introduced into the capsule 10 under high pressure (e.g., greater than thirty (30) psi). The capsule 10 also includes a barrier 18 to prevent leakage of the coffee grounds from the capsule 10 when the capsule is pierced during the coffee brewing process. During the brewing process, the bottom wall 13 of the capsule is pierced so that water is introduced into the capsule 10 and mixes with the coffee grounds 17. The brewed espresso beverage then exits through the cover 15 of the capsule 10, which cover 15 has been ruptured to produce a number of openings or perforations.

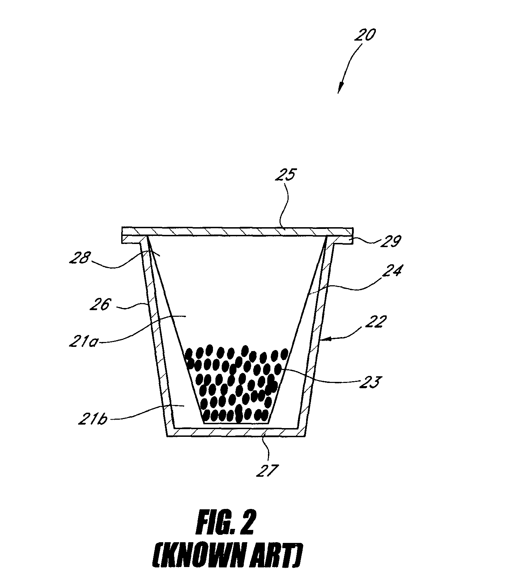

FIG. 2 illustrates another beverage cartridge 20 known in the art. The cartridge 20 includes hollow base 22, a filter element 24, and a cover 25. The base 22 is cup-shaped with a gradually tapering truncated conical side wall 26 closed at one end by a substantially flat bottom wall 27 and defining a circular access opening 28 at the opposite end. The cover 25 is secured to a radially outwardly protruding lip 29 surrounding the access opening 28. The filter element 24 is disposed within the hollow base 22 and attached to the base 22 adjacent the lip 29. The filter element 24 defines a first chamber 21a and a second chamber 21b. The first chamber 21a contains substantially non-soluble coffee grounds 23 for producing a brewed coffee beverage when water is introduced into the cartridge 20 under low pressure (e.g., less than thirty (30) psi). During the brewing process, the cover 25 is pierced so that water is introduced into the first chamber 21 and mixes with the coffee grounds 23. The brewed coffee beverage then passes through the filter 24 (which removes the used coffee grounds from the brewed coffee beverage) and into the second chamber 21b. The brewed coffee then exits the cartridge 20 through the bottom 27 of the cartridge 20, which has also been pierced to produce an opening.

### SUMMARY OF THE DISCLOSURE

Single-serve beverage machines are devices that are designed to produce a single serving, or sometimes a single cup, of a desired beverage. In comparison to other types of beverage machines (such as drip coffee makers having a multi-cup carafe), single-serve beverage machines can, for example, enhance convenience by reducing the time to prepare the beverage. Furthermore, single-serve beverage machines can reduce waste by decreasing the likelihood of producing excess amounts of the beverage, which may go unused and be subsequently discarded.

Some single-serve beverage machines employ a cartridge or capsule containing one or more instant beverage components to produce the beverage. Generally, such cartridges are received in the single-serve beverage machine, are used to produce the single serving of the beverage, and are then removed from the machine and discarded, thereby freeing the machine for further use. However, as the cartridges are used only once, it can be desirable to reduce the complexity and the number of parts of the cartridges, thus reducing production and manufacturing costs and reducing waste.

Moreover, in some instances, it can be desirable for the cartridge to be configured to encourage mixing of the instant beverage component during the production of the beverage. For example, in certain cases it is helpful for the cartridge to facilitate mixing of the instant beverage component with a liquid that is injected into the cartridge. Such mixing can, for example, enhance dissolution of some of the instant beverage component into the liquid and can increase the likelihood of the beverage being produced as intended (e.g., taste profile, intensity, color, and the like).

Further, as certain types of instant beverage components (e.g., coffee, tea, fruit juices, etc.) can be degraded by contact with the environment, it can be helpful to reduce the surface area of the instant beverage component that is exposed to the environment and/or to provide an alternate environment. For example, the instant beverage component can be compressed, thereby evacuating much of the air disposed among the instant beverage component and reducing the total surface area of the instant beverage component in contact with air. Additionally, such compression can result in the instant beverage component occupying a reduced volume. In some cases, the instant beverage component is housed in an alternate environment, such as nitrogen, carbon dioxide, or a combination thereof. In certain embodiments, the instant beverage component is housed so as to limit or otherwise control the transmission of water vapor and/or oxygen between the instant beverage component and the ambient environment.

In some embodiments, a single-serve beverage cartridge for use with a single-serve beverage machine includes a cup having a bottom wall and an outwardly extending rim disposed generally opposite the bottom wall, a lid joined with the rim, and a single serving of an instant beverage component disposed in the cup. In some embodiments, the cartridge is configured to be pierced to form an opening through which a liquid can enter the cartridge. In certain embodiments, the instant beverage component is configured to mix with the liquid to form a beverage. In some embodiments, the cartridge is further configured to be pierced to allow the beverage to exit the cartridge. In certain embodiments, the cartridge does not include a filter or a barrier configured to retain non-liquid matter within the cartridge.

In certain embodiments, the instant beverage component comprises microground coffee. In some embodiments, the instant beverage component comprises dry coffee extract. In some embodiments, the instant beverage component comprises microground coffee and dry coffee extract. In certain embodiments, air within the cartridge has been substantially replaced with nitrogen.

In certain embodiments, the cartridge also includes an insert disposed in the cup. The insert can be configured to facilitate mixing of the instant beverage component and the liquid. In certain cases, the insert comprises a spheroidal member. In some instances, the insert is configured to dissolve in the liquid. In some embodiments, the insert is configured to react with the liquid to produce bubbles in the liquid.

In certain embodiments, the cartridge further comprises a membrane that is soluble in the liquid. The membrane can be configured to maintain the instant beverage component in a first portion of the cup and inhibit the instant beverage component from accessing a second portion of the cup. In some instances, the membrane comprises a sweetener. In some instances, the sidewall is frustoconical in shape and the membrane is disposed across a diameter of the frustoconical sidewall.

In some embodiments, the instant beverage component is compressed such that substantially all the air has been removed therefrom. In some cases, the cup is configured to collapse. In certain instances, the cup comprises a flexible material and substantially conforms to the shape of the block of the instant beverage component. In some instances, the compressed instant beverage component is substantially rectangular in cross-sectional shape.

In some embodiments, a single-serve beverage cartridge for use with a single-serve beverage machine includes a cup having a bottom wall and a shoulder disposed generally opposite the bottom wall, a lid joined with the shoulder, and a single serving of an instant beverage component disposed in the cup. In certain instances, the cartridge also includes an insert disposed in the cup. The insert can be configured to facilitate mixing of the instant beverage component with a liquid introduced into the cup to produce the beverage.

In some embodiments, the insert comprises a spheroidal member. In certain instances the insert is configured to dissolve in the liquid. In some cases, the insert includes a sweetener. In some embodiments, the insert is configured to react with the liquid to produce bubbles in the liquid. Some embodiments of the cartridge do not include a filter or a barrier.

In certain configurations, instant beverage component includes dry coffee extract. In other cases, the instant beverage component includes microground coffee. In some cases, the instant beverage component includes microground coffee and dry coffee extract. In certain embodiments, the lid and the bottom wall are each configured to be pierced to allow a flow of liquid therethrough.

In some embodiments, a cartridge for producing a single serving of a beverage includes a cup having a shoulder, a bottom wall, and a sidewall extending between the shoulder and the bottom wall. In some arrangements, the cartridge also includes a lid sealed with the shoulder, such that the lid and the cup form a chamber. A single serving of an instant beverage component can be disposed in the chamber. Some embodiments of the cartridge also include a membrane configured to maintain the instant beverage component in a first portion of the chamber and inhibit the instant beverage component from accessing a second portion of the chamber. The membrane can be further configured to dissolve when a water-soluble liquid is introduced into the cup, thereby releasing the instant beverage component into the second portion of the chamber. In certain instances, the instant beverage component and the liquid mix in the second chamber to produce the beverage.

In some embodiments, the membrane is a sweetener. In certain configurations, the sidewall is frustoconical in shape, and the membrane is disposed across a diameter of the frustoconical sidewall. In some instances, the instant beverage component comprises dry coffee extract and microground coffee. In certain cases, the first portion of the chamber is adjacent the lid and the second portion of the chamber is adjacent the bottom wall.

In some embodiments, a cartridge for producing a single serving of a beverage includes a cup having a bottom wall and a shoulder disposed generally opposite the bottom wall, a lid joined with the shoulder, and a single serving of an instant beverage component disposed in the cup. The instant beverage component can be compressed into a block or puck such that substantially all the air has been removed therefrom. In certain such instances, the block of instant beverage component is configured to break apart when a liquid is injected into the cup, thereby facilitating mixing of the instant beverage component with the liquid to form the beverage.

In some instances, the instant beverage component comprises microground coffee. In some cases, the block of instant beverage component is substantially rectangular. In certain embodiments, the cup comprises a flexible material and substantially conforms to the shape of the block of the instant beverage component. In some instances, the cup is configured to collapse.

In certain embodiments, a method of manufacturing a single-serve beverage cartridge for use with a single-serve beverage machine includes forming a cup having a bottom wall and a shoulder disposed generally opposite the bottom wall, joining a lid with the shoulder, placing a single serving of an instant beverage component in the cup, and placing an insert in the cup. The insert can be configured to facilitate mixing of the instant beverage component with a liquid introduced into the cup to produce the beverage. In some instances, placing the instant beverage component in the cup and placing the insert in the cup occur simultaneously.

In some embodiments, a method of manufacturing a cartridge for producing a single serving of a beverage includes forming a cup comprising a shoulder, a bottom wall, and a sidewall extending between the shoulder and the bottom wall, sealing a lid with the shoulder so that the lid and the cup form a chamber, and placing a single serving of an instant beverage component in a first portion of the chamber. In certain embodiments, the method also includes sequestering the instant beverage component from a second portion of the chamber with a membrane. In some embodiments, the membrane is configured to dissolve when a water-soluble liquid is introduced into the cup thereby releasing the instant beverage component into the second portion of the chamber. In other embodiments, the membrane is configured to be pierced by a piercing member. Certain embodiments of the method further include mixing the instant beverage component and the liquid in the second portion of the chamber.

In some embodiments, a method of manufacturing a cartridge for producing a single serving of a beverage includes forming a cup having a bottom wall and a shoulder disposed generally opposite the bottom wall, joining a lid with the shoulder, compressing a single serving of an instant beverage component into a block such that substantially all the air has been removed therefrom, and placing the block in the cup. In some instances, the block of the instant beverage component is configured to break apart when a liquid is injected into the cup. Certain instances of the method also include mixing the instant beverage component with the liquid to form the beverage.

### BRIEF DESCRIPTION OF THE FIGURES

Various embodiments are depicted in the accompanying drawings for illustrative purposes, and should in no way be interpreted as limiting the scope of the embodiments. Furthermore, various features of different disclosed embodiments can be combined to form additional embodiments, which are part of this disclosure.

FIG. 1 illustrates a schematic representation of a beverage cartridge known in the art having a barrier to prevent leakage of coffee grounds.

FIG. 2 illustrates a schematic representation of a beverage cartridge known in the art having a filter to remove coffee grounds from a brewed coffee beverage.

FIGS. 3A-3C illustrate schematic cross-sectional representations of an embodiment of a single-serve beverage cartridge, and an example use thereof, for an instant beverage.

FIG. 4 illustrates a schematic cross-sectional representation of an embodiment of a single-serve beverage capsule for an instant beverage.

FIG. 5 illustrates a schematic cross-sectional representation of another embodiment of a single-serve beverage cartridge.

FIG. 6 illustrates a schematic cross-sectional representation of another embodiment of a single-serve beverage cartridge.

FIGS. 7A and 7B illustrate schematic cross-sectional representations of another embodiment of a single-serve beverage cartridge, and an example use thereof.

FIG. 8 illustrates a schematic cross-sectional representation of another embodiment of a single-serve beverage cartridge, including an insert to facilitate mixing within the cartridge.

FIG. 9 illustrates a schematic cross-sectional representation of another embodiment a single-serve beverage cartridge, wherein the instant beverage is contained within a packet or pouch.

FIG. 10 illustrates a schematic cross-sectional representation of a single-serve beverage cartridge, wherein the instant beverage is provided in a compact, compressed form.

### DETAILED DESCRIPTION

The following discussion is presented to enable a person skilled in the art to make and use one or more of the present embodiments. The general principles described herein may be applied to embodiments and applications other than those detailed below without departing from the spirit and scope of the disclosure. Indeed, the present embodiments are not intended to be limited to the particular embodiments shown, but are to be accorded the widest scope consistent with the principles and features disclosed or suggested herein.

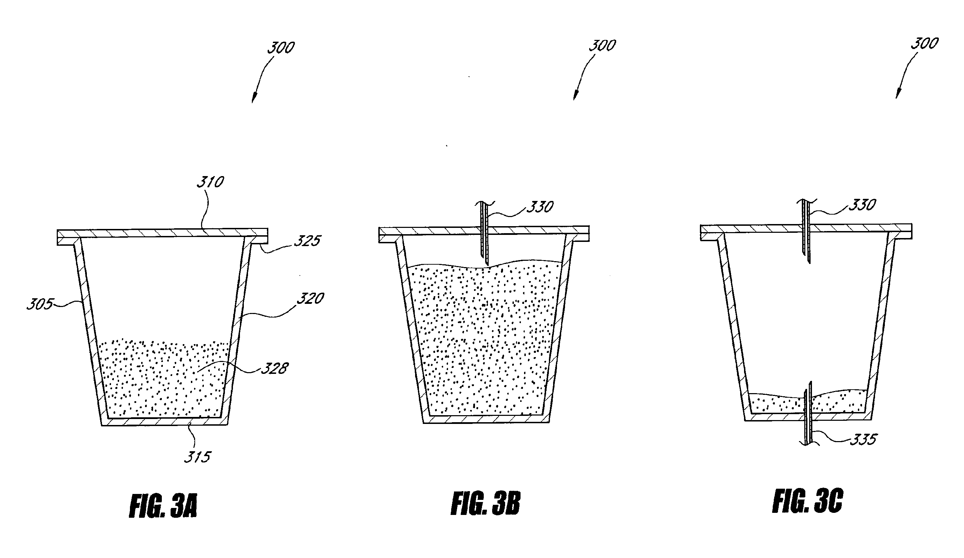

With regard to FIGS. 3A-3C, cross-sectional views of a single-serve beverage cartridge 300 for an instant beverage component 328, such as instant coffee, are illustrated. The single-serve beverage cartridge 300 can be configured for use in a single-serve beverage machine, such as an automatic single-serve coffee brewer. The term "cartridge" as used herein shall be given its ordinary and customary meaning, and shall include, without limitation, cartridges, capsules, cups, pods, and the like.

In the embodiment shown in FIG. 3A, the cartridge 300 includes a cup 305 and a lid 310. The cup 305 has a generally hollow structure having a bottom wall 315 and a sidewall 320. The cartridge 300 can have a gradually tapered, generally cylindrical shape; however, other shapes can be used without departing from the spirit and/or scope of the disclosure.

As illustrated, the cup 305 can include an outwardly extending rim or shoulder 325. The lid 310 can be secured, adhered, or otherwise connected with the outwardly extending rim 325 or adjacent thereto, thereby forming a sealed cartridge. The seal can be an airtight seal to reduce entry of ambient air into the cartridge 300 and thus promote freshness of the instant beverage component 328. The lid 310 can be secured or adhered to the cartridge 300 using any suitable adhesive or sealing techniques and materials, such as heat-sealing, crimping, gluing, UV-curing, applying ultrasonic or microwave energy (e.g., sonic welding), and otherwise.

In some embodiments, the cartridge 300 can be vacuum sealed or pressurized. In some embodiments, the oxygen or ambient air in the cartridge 300 is replaced with nitrogen (or another generally non-reactive gas). In certain other embodiments, the oxygen or ambient air in the cartridge 300 is replaced with a combination of nitrogen and carbon-dioxide. Replacement of the oxygen or ambient air in the cartridge 300 can, for example, enhance the shelf-life of the cartridge 300 and reduce the chance of spoliation or degradation of the contents of the cartridge 300. In some embodiments, one or more portions of the cartridge 300 (e.g., the cup 305 and/or the lid 310) are configured to limit or otherwise control the transmission of water vapor and/or oxygen between the instant beverage component 328 and an external environment (e.g., ambient air) in order to provide an acceptable shelf life. For example, in some cases, the lid 310 has a water vapor transmission rate of less than or equal to about 0.050 g/m²/day (measured as per ASTM F-1249). In certain embodiments, the lid 310 has an oxygen transmission rate of less than or equal to about 0.500 cc/m²/day (measured as per ASTM D3985). Those skilled in the art will recognize that such transmission rates are illustrative and thus, should not be construed as limiting. In some instances, an acceptable shelf life is between about 6 months and about 12 months after assembly of the cartridge 300. However, depending on the contents of the cartridge 300, a shelf life that is shorter (e.g., about 3 months) or longer (e.g., about 18 months) may be applicable and is contemplated by this disclosure.

The cartridge 300 can include a single serving, or single-serve portion, of the instant beverage component 328, such as instant coffee, tea, fruit juice, soft drink, or any other beverage that can be produce by mixing one or more substantially soluble beverage components with a fluid. The term "instant" as used herein shall be given its ordinary and customary meaning, and shall include, without limitation, products that readily dissolve or disperse in a liquid, such as water or milk.

In some embodiments, the instant beverage component 328 includes microground or pulverized coffee, such as that described in U.S. Patent Application Publication No.2010/0009039, filed July 9, 2008, and titled "METHOD OF MAKING BEVERAGES WITH ENHANCED FLAVORS AND AROMAS," the entirety of which is incorporated herein by reference. For example, in some cases, the instant beverage component 328 includes coffee having a median particle size of about 350 microns or less. In some embodiments, the instant beverage component 328 includes a combination of dry coffee extract and microground coffee. In certain embodiments, the instant beverage component 328 includes freeze-dried coffee. In some embodiments, the instant beverage component 328 includes a combination of freeze-dried coffee and microground coffee. In certain instances, the instant beverage component 328 includes particulate matter, such as particulates of microground coffee.

The type and amount of instant beverage component 328 can be selected to provide a beverage having certain desired characteristics. For example, the amount of instant beverage component 328 can be selected to deliver a predetermined strength of beverage. In some embodiments, the instant beverage component 328 can include dairy, soy, sugar, artificial sweeteners, nutrients, flavorings, or other soluble components, in addition to, for example, coffee or tea.

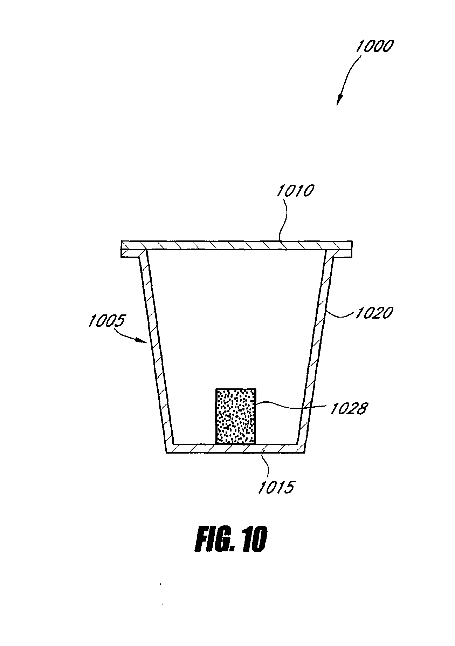

The instant beverage component 328 can be provided in the cup 305 in many forms. For example, in some embodiments, the instant beverage component 328 is generally loose and non-compressed. In another embodiment, the instant beverage component 328 is generally compressed and/or compacted (see, e.g., Fig. 10). In some embodiments, the instant beverage component 328 is a powder. In certain instances, the instant beverage component 328 is granular. In some embodiments, the instant beverage component 328 is a slurry or syrup, which is intended to be dissolved, dispersed, and/or diluted by the addition of liquid to produce the beverage.

In accordance with several embodiments, the cartridge 300 does not include a barrier (as shown in FIG. 1), a filter (as shown in FIG. 2), or other retention element because the nature of the instant beverage component 328 does not require the inclusion of such element. In contrast to the cartridge 10 of FIG. 1, leakage of coffee grounds is not a problem for instant coffee or espresso and therefore a barrier or other retention element is not needed for cartridge 300. In contrast to the cartridge 20 of FIG. 2, because the instant coffee contained in the cartridge 300 does not include large coffee particles and is soluble, a filter element is not needed in the cartridge 300 to remove coffee grounds from the brewed coffee beverage.

As illustrated in FIG. 3B, the cup 305 and the lid 310 can be constructed of a liquid-impermeable material that is capable of being pierced or perforated by a first piercing member 330 (of a single-serve beverage machine, not shown) to allow the introduction of liquid (e.g., hot water) into the cartridge 300. For example, the cup 305 and the lid 310 can be made of one or more metallic (e.g., aluminum), paper-based, polymeric (e.g., plastic, polyethylene, polyurethane, nylon), and/or biodegradable materials. In some embodiments, the cup 305 and/or the lid 310 is constructed of a flexible material. In certain instances, the lid 310 of the cartridge 300 can be pierced or perforated by the first piercing member 330. In such cases, liquid can be injected or otherwise delivered through the first piercing member 330 and/or the opening created therefrom into the cup 305, thereby forming an instant beverage within the cup 305. For example, the first piercing member 330 can have a hollow needle or cannula-like element.

In some embodiments, the introduction of liquid into the cartridge 300 encourages mixing of the liquid and the instant beverage component 328. For example, the liquid can be introduced as a pressurized (e.g., between about 0.5 bars and about 20 bars) stream, which can impinge the instant beverage component 328 and/or the cup 305 (e.g., the bottom wall 315) and facilitating mixing. In some embodiments, the liquid is injected in a manner such that liquid and instant beverage component 328 are effectively churned or swirled within the cup 305, thereby allowing the instant beverage particles to be dispersed and/or dissolved more readily. For example, in some such cases the liquid is injected in a cyclonic fashion.

Generally, the liquid introduced into the cartridge 300 is water, but most any type of liquid can be used. For example, in some embodiments, the liquid is milk, such as for the preparation of hot cocoa. In other embodiments, the liquid is a juice. In some embodiments, the liquid is carbonated, such as for the preparation of a soft drink. In certain embodiments, the liquid is alcoholic, such as for the preparation of a shot or a cocktail. In some instances, a hot liquid is introduced, e.g., for hot beverages. In other instances, a cold liquid is introduced, e.g., for iced beverages. The amount of liquid introduced can be predetermined or adjusted based on a desired strength of the beverage.

In some embodiments, after the cartridge 300 has been pierced by the first piercing member 330, the liquid has been introduced into the cartridge 300, and the instant beverage component 328 have been at least partly mixed with and/or dissolved into the liquid, the instant beverage is ready to exit the cartridge 300. Accordingly, in some instances, the cup 305 can be configured to provide a location for the liquid to exit the cartridge 300. For example, the bottom wall 315 can be configured to be pierced or perforated by a second piercing member 335 to allow the prepared beverage to exit the cartridge 300, such as is shown in FIG. 3C. The second piercing member 335 can be a hollow needle or cannula-like element, such that the prepared beverage can flow through the second piercing member 335 for delivery to a cup or other beverage receptacle for consumption (e.g., via a discharge spout). In some embodiments, the prepared beverage does not flow through the second piercing member 335, rather the prepared beverage exits via a hole or opening formed by the second piercing member 335. In certain embodiments, the second piercing member 335 pierces approximately the center (e.g., radial center) of the bottom wall 315. In yet other embodiments the cartridge 300 may be fabricated with one or more holes or openings in the bottom wall 315. In such embodiments, the hole(s) may be sealed by a removable tab or other covering that may be stripped from the bottom wall prior to use.

In use, the cartridge 300 can be received by a single-serve beverage machine with the bottom wall 315 facing downward. In other embodiments, the cartridge 300 can be received with the bottom wall 315 facing toward the user, upward, or away from the user depending on the configuration of the single-serve beverage machine. In some embodiments, the openings in the cartridge 300 are made on different portions of the cartridge 300 (see, e.g., FIG. 3C). In other embodiments, all openings in the cartridge 300 are made on a single side (e.g., the bottom wall 315 or the lid 310) of the cartridge 300. In certain instances, just a single opening is formed in the cartridge 300. In other instances, more than two openings are formed in the cartridge 300. In some embodiments, one or more of the first and second piercing members 330, 335 pierce the lid 310 to facilitate injection of liquid into the cartridge 300. In some cases, one or more of the first and second piercing members 330, 335 pierce the bottom wall 315 to facilitate discharge of the prepared beverage from the cartridge 300.

In certain instances, one or more of the first and second piercing members 330, 335 include multiple piercing features. For example, the second piercing member 335 can include a plurality of sharpened features in order to create a plurality of openings in the cartridge 300. Such a configuration can provide, for example, a greater outflow rate of the prepared beverage from the cartridge 300, compared to embodiments having just a single opening for outflow. The plurality of openings can be formed at different times or simultaneously.

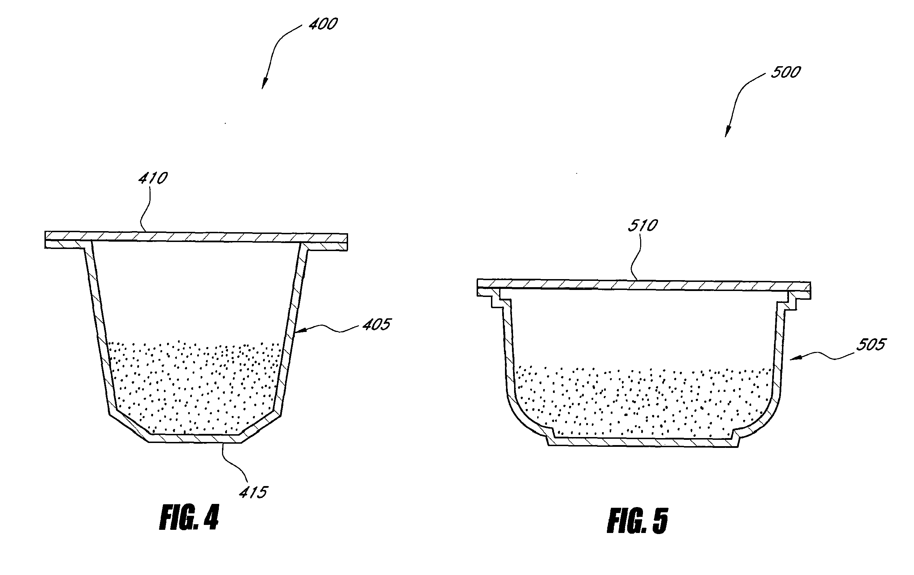

FIG. 4 illustrates an embodiment of a single serve beverage capsule 400 for an instant beverage, in accordance with another embodiment. The capsule 400 resembles or is identical to the cartridge 300 discussed above in many respects. Accordingly, numerals used to identify features of the capsule 400 are incremented by a factor of one hundred (100) to identify like features of the capsule 400. This numbering convention generally applies to the remainder of the figures. Any component or step disclosed in any embodiment in this specification can be used in other embodiments.

As shown, the beverage capsule 400 includes a cup 405, a lid 410, and a bottom wall 415. The bottom wall 415 can be generally angled, rounded, or curved instead of the generally flat bottom wall illustrated in FIGS. 3A-3C. In some embodiments, the capsule 400 is received by a single-serve beverage machine with the bottom wall 415 facing upward or away from the user. In some embodiments, the bottom wall 415 is configured to be pierced by a piercing member (not shown) to allow for injection of a pressurized liquid (e.g., hot water). The lid 410 can be configured to be pierced or perforated by, or ruptured against, one or more piercing members, thereby allowing the prepared beverage to exit the capsule 400. In some embodiments, the lid 410 is configured to bow outward due to a greater pressure within the capsule 400 compared to the outside of the capsule 400. In certain instances, one or more piercing members are positioned adjacent the lid 410 at a distance such that the lid 410 can be perforated or ruptured by the one or more piercing members. The piercing members can include generally sharp elements or generally blunt elements.

FIG. 5 illustrates another embodiment of a single-serve beverage cartridge 500 for an instant beverage. In many respects, the beverage cartridge 500 includes similar elements as beverage capsules/cartridges 300-400 described above (e.g., a cup 505 and a lid 510). In some embodiments, the cartridge 500 is configured to be received by a single-serve beverage machine with the lid 510 facing downward. In another embodiment, the cartridge 500 is configured to be received with the lid 510 facing upward. In some instances, such as in the illustrated embodiment, the beverage cartridge 500 has a height (e.g., the distance between the lid 510 and the bottom wall 515) that is less than a diameter (e.g., the outside diameter of the lid 510). In some cases, the beverage cartridge 500 is frustoconical and generally shorter in height than the cartridge 300 of FIGS. 3A-3C.

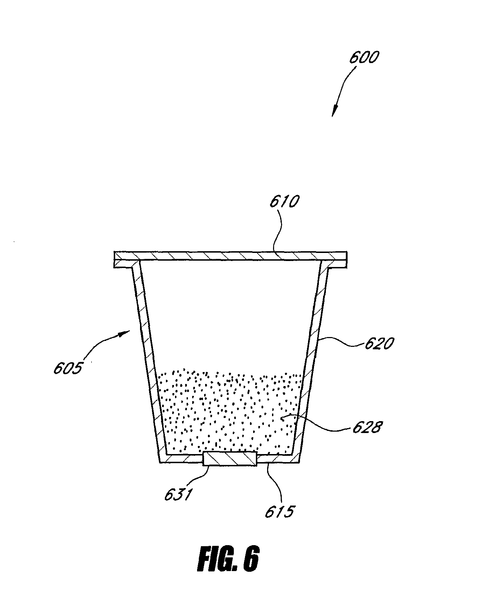

FIG. 6 illustrates another embodiment of a single-serve beverage cartridge 600. The cartridge 600 resembles or is identical to the cartridges 300-500 described above in many ways, but differs in certain respects, some of which are discussed below. As shown, the cartridge 600 includes cup 605 and a septum 631. In some embodiments, the septum 631 is disposed on a bottom wall 615 of the cartridge 600. In certain instances, the septum 631 is disposed in the lid 610 of the cartridge 600. Some embodiments have the septum 631 positioned in the sidewall of the cup 605. In certain instances, the cartridge 600 includes a plurality of septa 631. For example, the cartridge 600 can include a first septum 631 in the bottom wall 615 and a second septum 631 in the lid 610.

The septum 631 can include an elastomeric material capable of deforming in such a way that, when punctured by an item, the septum 631 forms a substantially airtight seal around that item. For example, in some instances, the septum 631 is made of silicone rubber or butyl rubber.

The septum 631 can be configured to seal the opening produced by a piercing member after retraction of the piercing member. Such a configuration can reduce the chance of leakage or spillage of residual contents of the cartridge 600, for example, during removal of the cartridge from the single-serve beverage machine. In other instances, in place of the septum 631, the cartridge 600 includes a one-way valve (such as a duckbill valve or a flap valve), which can similarly seal the opening produced by a piercing member and reduce the likelihood of leakage or spillage.

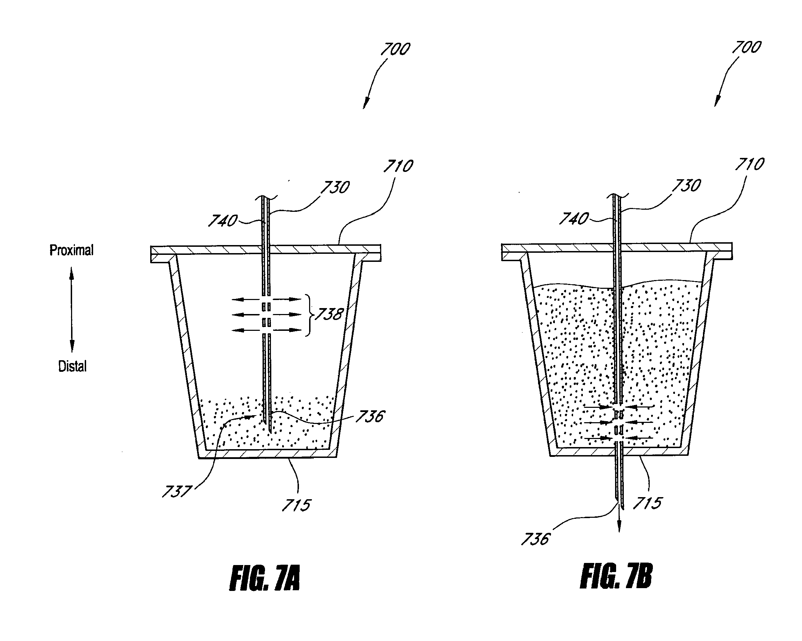

FIGS. 7A and 7B illustrate another embodiment of a single-serve beverage cartridge 700. The cartridge 700 resembles or is identical to the cartridges 300-600 described above in many ways, but differs in certain respects, some of which are discussed below. For example, in some embodiments, a single piercing member 730 can form multiple openings in the cartridge 700.

The piercing member 730 can include a distal aperture 736 and one or more proximal apertures 738. In some instances, the piercing member 730 is inserted into the cartridge 700 so as to piece a lid 710 but not pierce a bottom wall 715. As shown, in certain configurations, a distal end 737 of the piercing member 730 is located among instant beverage component 728.

In certain embodiments, the liquid flows through a channel 740 in the piercing member 730 and exits into the cartridge 700 via the distal aperture 736 and the one or more proximal apertures 738. In some instances, the distal end 737 of the piercing member 730 is located among the instant beverage component 728. Such as configuration can, for example, encourage mixing and/or dissolution of the instant beverage component 728 with the liquid, e.g., as the liquid flows out of the distal end 737 and strikes or otherwise encounters the instant beverage component 728 and/or the bottom wall 715. Further, as the liquid level rises in the cartridge 700, the one or more proximal apertures 738 can also promote such mixing and/or dissolution of the instant beverage component 728 with the liquid. In some cases, the liquid is encouraged (e.g., pumped) through the channel 740 with sufficient force to overcome the head pressure of the liquid in the cartridge 700. In some instances, the flow of liquid ceases after a predetermined volume of liquid has been introduced into the cartridge 700 or period of time has elapsed.

In certain configurations, the piercing member 730 moves distally to pierce the bottom wall 715. In some instances, after such movement of the piercing member 730, the one or more proximal apertures 738 are positioned about adjacent with the bottom wall 715 and the distal aperture 736 is located outside the cartridge (e.g., in fluid communication with a dispensing nozzle (not shown)). The prepared beverage in the cartridge 700 can thus flow out of the cartridge 700 via the one or more proximal apertures 738, the channel 740, and the distal aperture 736.

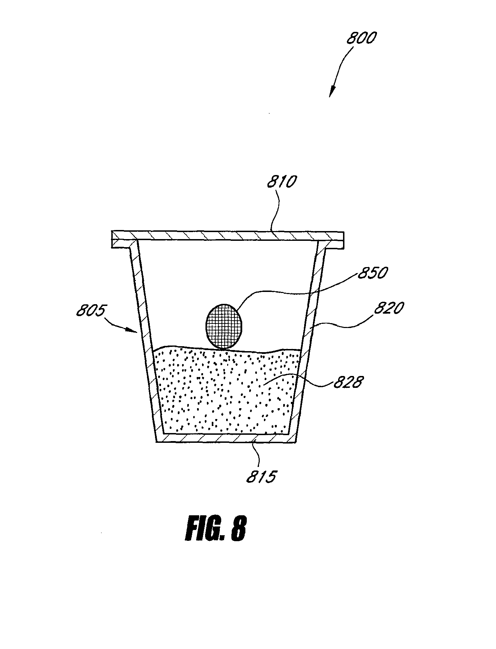

FIG. 8 illustrates a schematic cross-sectional representation of another embodiment of a single-serve beverage cartridge 800. The cartridge 800 resembles or is identical to the cartridges 300-700 described above in many ways, but differs in certain respects, some of which are discussed below.

As shown, the cartridge 800 includes an insert 850. In certain embodiments, the insert 850 is configured to facilitate mixing of the instant beverage component 828. For example, the insert 850 can be configured to mix the instant beverage component (e.g., instant coffee) with liquid introduced into the cartridge 800. In some embodiments, the insert 850 is configured to effectively increase the rate of dissolution and/or decrease the time to prepare the beverage.

The illustrated embodiment has a single insert 850. However, in other embodiments, the cartridge 800 includes a plurality of inserts 850. For example, the cartridge 800 can include a plurality of substantially cubic inserts 850. The insert 850 can have most any shape, such as spherical, elliptical, cylindrical, helical, spiral, polygonal, irregular, or otherwise. In some embodiments, the insert 850 has a bead-like structure. The insert 850 can be free-floating within the cartridge 800 (e.g., can rattle when the cartridge 800 is shaken) or can be adhered or otherwise secured to the cartridge 800 (e.g., secured to the lid 810, bottom wall 815, or sidewall 820) or to a portion of instant beverage component 828. In some cases, the insert 850 is disposed in a compressed block of instant beverage component 828 (see FIG. 10).

In some embodiments, the insert 850 includes features to allow liquid to pass by and/or around the insert 850. For example, the insert 850 can include one or more grooves, dimples, bumps, ridges, through-holes, or other features. Such a configuration can be helpful, for example, in avoiding the insert becoming lodged in or otherwise blocking an outlet opening (e.g., a puncture in the bottom wall 815 created by a piercing member or a cannula in the piercing member) through which the prepared beverage flows to exit the cartridge 800.

In some embodiments, the insert 850 is configured to be buoyant in the liquid that is introduced into the cartridge 800 and mixed with the instant beverage component 828. For example, the insert 850 can be configured to float in a coffee beverage. A floating insert 850 can, for example, reduce the chance of the insert 850 blocking an outlet opening in the cartridge 800. For instance, the buoyancy of the insert 850 can maintain the insert 850 at the surface of the beverage in the cartridge 800, which is generally above the outlet during at least a portion of outflow of the beverage from the cartridge 800.

In some embodiments, inflow of the liquid results in the insert 850 being bobbed (e.g., pushed up, down, and/or around) within the liquid and the instant beverage component 828, thereby mixing encouraging mixing of the same. Further, in certain cases, such bobbing of the insert 850 can create turbulence in the liquid and the instant beverage component 828, thus facilitating mixing. In some such cases, the turbulence from the insert 850 can facilitate the production of foam and/or bubbles in the beverage, which be desirous (e.g., in a cappuccino beverage).

The insert 850 can include one or more protrusions, knobs, grooves, struts, fins, paddles, and/or other elements configured to facilitate mixing. The insert 850 can be sized large enough that it will not exit the cartridge through a hole or opening formed by one or more piercing or penetrating members. For example, in certain cases, the insert 850 has an outside diameter that is larger than the diameter of a channel in the piercing member (not shown) through which the instant beverage flows out of the cartridge 800. In various embodiments, the insert 850 has a solid, mesh-like, braided, and/or wire-form portion or structure.

Many materials can be used to form the insert 850. In some embodiments, the insert 850 is made of a non-soluble material. In other embodiments, the insert is made of a water-soluble material. In some instances, the insert 850 includes a flavor enhancer, such as a sweetener. For example, the insert can be a spheroid of sugar, which can both enhance mixing (e.g., as the spheroid is tumbled during the inflow of the liquid) and sweeten the beverage (e.g., as the sugar dissolves into the beverage). Various other types of inserts are contemplated, which can provide both mixture and flavor enhancement.

In certain configurations, the insert 850 is located atop the instant beverage component 828. In other instances, the insert 850 can be positioned below the instant beverage component 828 or mixed among the instant beverage component 828. Of course, in certain cases, the insert 850 can migrate or otherwise change position with respect to some portion of the instant beverage component 828. For example, during transport, the insert 850 may move from atop the instant beverage component 828 to among the instant beverage component 828.

In some embodiments, the insert 850 may be "activated" upon introduction of a liquid substance. For example, the insert 850 may be configured to spin or otherwise agitate or move upon introduction of a liquid, such as water. In certain instances, the insert 850 includes a component that reacts with the liquid (e.g., to produce carbon dioxide) which can encourage movement of the insert 850, the liquid, and/or instant beverage component 828 the within the cartridge 800, thereby facilitating mixing.

In some embodiments, the insert 850 is mechanically activated. For example, some embodiments of the cartridge 800 include built-in structural elements (e.g., channels, grooves, ducts, nozzles, or otherwise) to facilitate mixing. In certain instances, the cartridge 800 includes an impeller or the like to facilitate mixing of the liquid and the instant beverage component 828. In some embodiments, the built-in structural elements are configured to produce jets of the liquid in order to provide sloshing or swirling of the liquid within the cartridge 800.

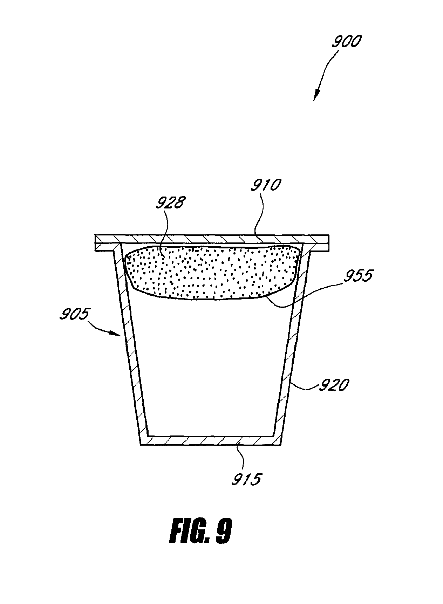

FIG. 9 illustrates a cross-sectional representation of another embodiment of a single-serve beverage cartridge 900. The cartridge 900 resembles or is identical to the cartridges 300-800 described above in many ways, but differs in certain respects, some of which are discussed below.

In the illustrated embodiment of the cartridge 900, the instant beverage component 928 is contained within a packet 955. In some embodiments, the packet 955 includes a non-soluble, liquid-impermeable packet, pouch, capsule, wrap or other enclosure configured to retain the instant beverage component. The packet 955 can be configured to be pierced or punctured by a piercing member (e.g., when the lid 910 is punctured), thereby releasing the instant beverage component 928 into the cup 905 to be mixed with a liquid introduced into the cartridge 900. Thus, in some embodiments, the packet 955 is adhered or otherwise coupled to a lid 910, a bottom wall 915, or a sidewall 920 of the cartridge 900. In another embodiment, the packet 955 can be free-floating or otherwise unattached to the cartridge 900.

In some embodiments, the packet 955 is made of a soluble material and is configured to dissolve upon introduction of the liquid, thereby releasing the instant beverage component 928 contained within the packet 955 into the interior of the cup 905 to be mixed with the liquid. In certain configurations, the packet 955 includes a membrane that is generally disposed across the cup 905, thereby dividing the cup 905 into a first portion that contains the instant beverage component 928 and a second portion that is substantially free of the instant beverage component 928. In some such cases, the membrane is configured to dissolve, rupture, or otherwise allow the instant beverage component 928 to access the second portion when the liquid is introduced into the cartridge 900.

FIG. 10 illustrates a cross-sectional representation of another embodiment of a single-serve beverage cartridge 1000. The cartridge 1000 resembles or is identical to the cartridges 300-900 described above in many ways, but differs in certain respects, some of which are discussed below. In the illustrated embodiment of the cartridge 1000, the instant beverage component 1028 is provided in a compact, compressed form (e.g., similar to a sugar cube or food coloring tablet). For example, the instant beverage component 1028 can be compressed to form a block, which can have most any shape (e.g., cubic, rectangular prismatic, spheroidal, torroidal, or otherwise). In certain embodiments, substantially all of the air has been evacuated from the compressed instant beverage component 1028. In some embodiments, the instant beverage component 1028 does not simultaneously contact substantially the entire internal surface area of the bottom wall 1015 (e.g., the surface area of the bottom wall 1015 that forms a part of the internal chamber of the cup 1005). In some embodiments, the compact nature of the instant beverage component 1028 can reduce the volume of space within the cartridge 1000 that is occupied by the instant beverage component 1028, thereby freeing such space for other uses. Similarly, in certain embodiments, the compact nature of the instant beverage component 1028 allows the overall size of the cartridge 1000 to be reduced.

In some embodiments, the compressed instant beverage component 1028 is contained within a soluble wrap, covering, or coating. In another embodiment, the compressed instant beverage component 1028 does not include a wrap covering, or coating. Typically, upon introduction of a liquid, the compressed instant beverage component 1028 can begin to break apart and mix with the liquid.

In certain arrangements, components of the cartridge 1000 (e.g., the cup 1005) are constructed of a flexible material. For example, in some embodiments, the cup 1005 is sufficiently flexible to be able to collapse and expand. Such a configuration can, for example, reduce the storage space occupied by the cartridge 1000 and reduce the likelihood of air or other gasses spoiling or otherwise degrading the instant beverage component 1028. In some cases, the cup 1005 is collapsed around the instant beverage component 1028. In certain instances, the cup 1005 is collapsed to substantially conform to the shape of the instant beverage component 1028 (e.g., rectangular as shown in Fig. 10). In some cases, air or other gases are substantially evacuated from the cartridge 1000. In some embodiments, the cup 1005 is configured to expand when the liquid is introduced into the cartridge 1000. In certain such cases, the cup 1005 expands to about its size and shape prior to collapse.

In various embodiments, the cartridges described herein are made of biodegradable or otherwise "environmental friendly" materials. The cartridges described herein can be configured for single use. The cartridges described herein can be compatible with one or more existing single-serve beverage machines or technologies.

Although certain embodiments have been described herein with respect to instant coffee, the cartridges described herein can include particulate materials or components for producing many other types of beverages, such as a chocolate based product (e.g., hot cocoa), tea, juice, and other beverages. Further, although some embodiments have been disclosed in which liquid is introduced into the cartridge, the introduction of other phases is contemplated. For example, in some embodiments, steam or a combination of steam and liquid water is introduced into the cartridge. Additionally, although certain embodiments have been disclosed that include an instant beverage component, the term "instant beverage component" is not limited to only a single component. Rather, the instant beverage component can comprise one component (e.g., coffee) or a plurality of components (e.g., coffee and a sweetener).

Conditional language, for example, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Although certain embodiments and examples have been described herein, it will be understood by those skilled in the art that many aspects of the methods and devices shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensible.

Some embodiments have been described in connection with the accompanying drawings. However, it should be understood that the figures are not drawn to scale. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, it will be recognized that any methods described herein may be practiced using any device suitable for performing the recited steps.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the embodiments are to be interpreted broadly based on the language employed in the embodiments and not limited to examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the embodiments and their full scope of equivalents. Various embodiments may include, but may not be limited to, the following:

1. A single-serve beverage cartridge for use with a single-serve beverage machine, the cartridge comprising:
a cup having a bottom wall and a shoulder disposed generally opposite the bottom wall;
a lid joined with the shoulder;
a single serving of an instant beverage component disposed in the cup; and
an insert disposed in the cup, the insert configured to facilitate mixing of the instant beverage component with a liquid introduced into the cup to produce the beverage.

2. The cartridge of Embodiment 1, wherein the insert comprises a spheroidal member.

3. The cartridge of Embodiment 1, wherein the insert is configured to dissolve in the liquid.

4. The cartridge of Embodiment 1, wherein the insert comprises a sweetener.

5. The cartridge of Embodiment 1, wherein the insert is configured to react with the liquid to produce bubbles in the liquid.

6. The cartridge of Embodiment 1, wherein the cartridge does not include a filter or a barrier.

7. The cartridge of Embodiment 1, wherein the instant beverage component comprises dry coffee extract.

8. The cartridge of Embodiment 1, wherein the instant beverage component comprises microground coffee.

9. The cartridge of Embodiment 8, wherein the instant beverage component further comprises dry coffee extract.

10. The cartridge of Embodiment 1, wherein the lid and the bottom wall are each configured to be pierced to allow a flow of the liquid therethrough.

11. A cartridge for producing a single serving of a beverage, the cartridge comprising:
a cup comprising a shoulder, a bottom wall, and a sidewall extending between the shoulder and the bottom wall;
a lid sealed with the shoulder, the lid and the cup forming a chamber;
a single serving of an instant beverage component disposed in the chamber; and
a membrane configured to maintain the instant beverage component in a first portion of the chamber and inhibit the instant beverage component from accessing a second portion of the chamber, the membrane further configured to dissolve when a water-soluble liquid is introduced into the cup thereby releasing the instant beverage component into the second portion of the chamber, the instant beverage component mixing with the liquid to produce the beverage.

12. The cartridge of Embodiment 11, wherein the membrane comprises a sweetener.

13. The cartridge of Embodiment 11, wherein the sidewall is frustoconical in shape, and the membrane is disposed across a diameter of the frustoconical sidewall.

14. The cartridge of Embodiment 11, wherein the instant beverage component comprises dry coffee extract and microground coffee.

15. The cartridge of Embodiment 11, wherein the first portion of the chamber is adjacent the lid and the second portion of the chamber is adjacent the bottom wall.

16. A cartridge for producing a single serving of a beverage, the cartridge comprising:
a cup having a bottom wall and a shoulder disposed generally opposite the bottom wall;
a lid joined with the shoulder; and
a single serving of an instant beverage component disposed in the cup, the instant beverage component being compressed into a block such that substantially all the air has been removed therefrom, wherein the block of the instant beverage component is configured to break apart when a liquid is injected into the cup, thereby facilitating mixing of the instant beverage component with the liquid to form the beverage.

17. The cartridge of Embodiment 16, wherein the instant beverage component comprises microground coffee.

18. The cartridge of Embodiment 16, wherein the block of the instant beverage component is substantially rectangular.

19. The cartridge of Embodiment 16, wherein the cup comprises a flexible material and substantially conforms to the shape of the block of the instant beverage component.

20. The cartridge of Embodiment 16, wherein the cup is configured to collapse.

21. A method of manufacturing a single-serve beverage cartridge for use with a single-serve beverage machine, the method comprising:
forming a cup having a bottom wall and a shoulder disposed generally opposite the bottom wall;
joining a lid with the shoulder;
placing a single serving of an instant beverage component in the cup; and
placing an insert in the cup, wherein the insert is configured to facilitate mixing of the instant beverage component with a liquid introduced into the cup to produce the beverage.

22. The method of Embodiment 21, wherein placing the instant beverage component and placing the insert in the cup in the cup occur simultaneously.

23. A method of manufacturing a cartridge for producing a single serving of a beverage, the method comprising:
forming a cup comprising a shoulder, a bottom wall, and a sidewall extending between the shoulder and the bottom wall;
sealing a lid sealed with the shoulder, the lid and the cup forming a chamber;
placing a single serving of an instant beverage component in a first portion of the chamber; and
sequestering the instant beverage component from a second portion of the chamber with a membrane, the membrane being configured to dissolve when a water-soluble liquid is introduced into the cup thereby releasing the instant beverage component into the portion of the chamber.

24. A method of manufacturing a cartridge for producing a single serving of a beverage, the method comprising:
forming a cup having a bottom wall and a shoulder disposed generally opposite the bottom wall;
joining a lid with the shoulder;
compressing a single serving of an instant beverage component into a block such that substantially all the air has been removed therefrom; and
placing the block in the cup,
wherein the block of the instant beverage component is configured to break apart when a liquid is injected into the cup, thereby facilitating mixing of the instant beverage component with the liquid to form the beverage.

25. A single-serve beverage cartridge for use with a single-serve beverage machine, the cartridge comprising:
   a cup having a bottom wall and an outwardly extending rim disposed generally opposite the bottom wall;
   a lid joined with the rim; and
   a single serving of an instant beverage component disposed in the cup,
   wherein the cartridge is configured to be pierced to form an opening through which a liquid can enter the cartridge,
   wherein the instant beverage component is configured to mix with the liquid to form a beverage,
   wherein the cartridge is further configured to be pierced to allow the beverage to exit the cartridge, and
   wherein the cartridge does not include a filter or a barrier configured to retain non-liquid matter within the cartridge.
26. The cartridge of Embodiment 25, wherein the instant beverage component comprises microground coffee.
27. The cartridge of Embodiment 25, wherein the instant beverage component comprises microground coffee and dry coffee extract.
28. The cartridge of Embodiment 25, wherein air within the cartridge has been substantially replaced with nitrogen.
29. The cartridge of Embodiment 25, further comprising an insert disposed in the cup, the insert being configured to facilitate mixing of the instant beverage component and the liquid.
30. The cartridge of Embodiment 29, wherein the insert comprises a spheroidal member.
31. The cartridge of Embodiment 29, wherein the insert is configured to dissolve in the liquid.
32. The cartridge of Embodiment 29, wherein the insert is configured to react with the liquid to produce bubbles in the liquid.
33. The cartridge of Embodiment 25, further comprising a membrane that is soluble in the liquid, the membrane configured to maintain the instant beverage component in a first portion of the cup and inhibit the instant beverage component from accessing a second portion of the cup.
34. The cartridge of Embodiment 33, wherein the membrane comprises a sweetener.
35. The cartridge of Embodiment 33, wherein the sidewall is frustoconical in shape, and the membrane is disposed across a diameter of the frustoconical sidewall.
36. The cartridge of Embodiment 25, wherein the instant beverage component is compressed such that substantially all the air has been removed therefrom.
37. The cartridge of Embodiment 36, wherein the cup is configured to collapse.
38. The cartridge of Embodiment 36, wherein the cup comprises a flexible material and substantially conforms to the shape of the block of the instant beverage component.
39. The cartridge of Embodiment 36, wherein the compressed instant beverage component is substantially rectangular in cross-sectional shape.

## Claims

1. A single-serve beverage cartridge for use with a single-serve beverage machine, the cartridge comprising:
a cup having a bottom wall and an outwardly extending rim disposed generally opposite the bottom wall;
a lid joined with the rim; and
a single serving of an instant beverage component disposed in the cup, wherein the cartridge is configured to be pierced to form an opening through which a liquid can enter the cartridge,
wherein the instant beverage component is configured to mix with the liquid to form a beverage,
wherein the cartridge is further configured to be pierced to allow the beverage to exit the cartridge, and
wherein the cartridge does not include a filter or a barrier configured to retain non-liquid matter within the cartridge,
**characterized in that**
the instant beverage component comprises microground coffee, and further **in that**
the instant beverage component is compressed such that substantially all the air has been removed therefrom.

2. The cartridge of Claim 1, wherein the instant beverage component comprises microground coffee and dry coffee extract.

3. The cartridge of claims 1 or 2, wherein air within the cartridge has been substantially replaced with nitrogen.

4. The cartridge of one of the preceding claims, further comprising an insert disposed in the cup, the insert being configured to facilitate mixing of the instant beverage component and the liquid.

5. The cartridge of Claim 4, wherein the insert comprises a spheroidal member.

6. The cartridge of one of claims 4 or 5, wherein the insert is configured to dissolve in the liquid.

7. The cartridge of one of claims 4 to 6, wherein the insert is configured to react with the liquid to produce bubbles in the liquid.

8. The cartridge of one of the preceding claims, further comprising a membrane that is soluble in the liquid, the membrane configured to maintain the instant beverage component in a first portion of the cup and inhibit the instant beverage component from accessing a second portion of the cup.

9. The cartridge of claim 8, wherein the membrane comprises a sweetener.

10. The cartridge of one of claims 8 or 9, wherein the sidewall is frustoconical in shape, and the membrane is disposed across a diameter of the frustoconical sidewall.

11. The cartridge of one of the preceding claims, wherein the cup is configured to collapse.

12. The cartridge of claim 11, wherein the cup comprises a flexible material and substantially conforms to the shape of the block of the instant beverage component.

13. The cartridge of one of claims 11 or 12, wherein the compressed instant beverage component is substantially rectangular in cross-sectional shape.
